# EUROPEAN PATENT APPLICATION

(11) **EP 4 355 002 A1**
(43) Date of publication of application: **17.04.2024**
(21) Application number: 21948899.6
(22) Date of filing: 09.07.2021
(51) Int. Cl.: H04W 72/12

(54) **COMMUNICATION METHOD AND APPARATUS, AND DEVICE AND STORAGE MEDIUM**

(71) Applicant: Huawei Technologies Co., Ltd., Shenzhen, Guangdong 518129 (CN)
(72) Inventor: GAO, Lei, Shenzhen, Guangdong 518129 (CN); CHENG, Xingqing, Shenzhen, Guangdong 518129 (CN); WANG, Jian, Shenzhen, Guangdong 518129 (CN)
(74) Representative: Isarpatent
(86) International application number: PCT/CN2021/105619
(87) International publication number: WO 2023/279405

(57) **Abstract**

This application provides a communication method, apparatus, and device, and a storage medium. The method includes: A first communication device sends first information to a second communication device, where the first information includes transmission indication information and at least one first code block group CBG of a first transport block TB, and the transmission indication information indicates a length of the first TB and/or a location of the at least one first CBG in the first TB. Based on the transmission indication information in the first information, at least one CBG of the first TB can be transmitted between the first communication device and the second communication device, to avoid always transmitting the entire TB. This reduces information transmission duration, improves transmission efficiency, and reduces resource consumption, to reduce power consumption of the communication devices.

## Description

### TECHNICAL FIELD

This application relates to communication technologies, and in particular, to a communication method, apparatus, and device, and a storage medium.

### BACKGROUND

Short-range communication plays an important role in people's daily life. For example, there is a requirement for short-range communication in the fields such as smart terminals, smart home, smart manufacturing, and smart automobiles. For example, Bluetooth is a most common short-range communication manner, and in particular, a Bluetooth low energy (Bluetooth low energy, BLE) version is widely used in aspects such as connections of a mouse, a keyboard, a wearable device, and a true wireless stereo (true wireless stereo, TWS) headset because of features of low power consumption and low costs.

In a short-range communication scenario, in consideration of factors such as costs, power consumption, and encoding/decoding implementation complexity, a transport block (Transport Block, TB) is usually divided into a plurality of code blocks (Code Blocks, CBs) for transmission. To ensure accuracy and integrity of information transmission, the entire TB needs to be retransmitted when the CBs are not correctly transmitted. However, retransmission of the entire TB results in low transmission efficiency.

### SUMMARY

Embodiments of this application provide a communication method and device, and a storage medium, to improve transmission efficiency.

According to a first aspect, an embodiment of this application provides a communication method, including: A first communication device sends first information to a second communication device. The first information includes transmission indication information and at least one first code block group CBG of a first transport block TB, and the transmission indication information indicates a length of the first TB and/or a location of the at least one first CBG in the first TB.

According to the communication method provided in the first aspect, when the first communication device sends the first information to the second communication device to transmit the at least one first CBG of the first TB, the transmission indication information is introduced into the first information, and the length of the first TB and/or the location of the at least one first CBG in the first TB are/is indicated based on the transmission indication information in the first information, so that the second communication device can correctly receive the at least one CBG in the first information based on the transmission indication information. In this way, in this application, the at least one CBG of the first TB can be transmitted, and the entire TB is not always transmitted. Therefore, information transmission duration is reduced, transmission efficiency is improved, and resource consumption is reduced, to reduce power consumption of the communication devices.

In a possible implementation, the transmission indication information includes information indicating that the at least one first CBG is all or a part of CBGs of the first TB.

According to the communication method provided in this implementation, the at least one CBG transmitted in the first information may be accurately indicated based on the information indicating that the at least one CBG is a part of or all CBGs of the first TB in the transmission indication information, so that the second communication device identifies whether the at least one CBG is a complete first TB, to obtain the first TB through subsequent combination.

In a possible implementation, when the at least one first CBG is all the CBGs of the first TB, the transmission indication information includes information that indicates the length of the first TB and/or modulation and coding scheme information; or when the at least one first CBG is the part of CBGs of the first TB, the transmission indication information includes information about the location of the at least one first CBG in the first TB.

According to the communication method provided in this implementation, in two different cases, that is, when the transmitted at least one CBG is all or a part of CBGs of the first TB, information that needs to be indicated is indicated based on different transmission indication information. This ensures that the second communication device can correctly receive the at least one CBG based on the transmission indication information, to reduce resource consumption.

In a possible implementation, the transmission indication information includes a first bitmap, bits in the first bitmap are in a one-to-one correspondence with CBGs included in the first TB, and the bits in the first bitmap indicate whether the corresponding CBGs in the first TB are included in the at least one first CBG.

According to the communication method provided in this implementation, the first bitmap indicates whether each CBG in the first TB is included in the at least one first CBG, so that the second communication device determines the location of the at least one first CBG in the first TB in the first information, to facilitate subsequent retransmission and combination.

In a possible implementation, the transmission indication information includes a first field. When the first field is a first value, the at least one first CBG is the part of CBGs of the first TB; or when the first field is any value in a preset value set, the at least one first CBG is all the CBGs of the first TB. The preset value set does not include the first value.

According to the communication method provided in this implementation, different values of the first field indicate that the at least one first CBG is all or a part of CBGs of the first TB. Further, when the first field is the any value in the preset value set, it may indicate that the first CBG is all the CBGs of the first TB, so that the first field is subsequently multiplexed when the at least one first CBG is all the CBGs of the first TB. This improves transmission reliability and reduces resource consumption.

In a possible implementation, when the first field is the any value in the preset value set, the first field indicates corresponding modulation and coding scheme information.

According to the communication method provided in this implementation, when the at least one first CBG is all the CBGs of the first TB, the first field also indicates a modulation and coding scheme when indicating that the at least one first CBG is all or a part of CBGs of the first TB. Resource consumption is reduced by multiplexing the first field.

In a possible implementation, the transmission indication information further includes a second field. When the first field is the first value, the second field indicates the location of the at least one first CBG in the first TB; or when the first field is the any value in the preset value set, the second field indicates the length of the first TB.

According to the communication method provided in this implementation, when the first field indicating that the at least one CBG is all or a part of CBGs of the first TB has different values, the second field indicates different content, so that the second field is multiplexed, and resource consumption is reduced.

In a possible implementation, when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

According to the communication method provided in this implementation, when the at least one CBG is retransmitted, the length of the TB corresponding to the at least one CBG and/or the modulation and coding scheme of the at least one CBG are/is sent by the first communication device to the second communication device when the first TB is initially transmitted. In this case, the length of the TB and/or the modulation and coding scheme corresponding to the at least one first CBG do/does not need to be sent when the at least one CBG is retransmitted this time. This reduces resource consumption.

In a possible implementation, the first information further includes CBG feedback information, and the CBG feedback information indicates whether a CBG in a second TB sent by the second communication device last time is correctly received.

According to the communication method provided in this implementation, the first communication device may feed back, based on the CBG feedback information in the first information, the second TB sent by the second communication device last time, to assist the second communication device in determining whether a new TB should be transmitted or the second TB needs to be retransmitted next time. Further, when the second TB needs to be retransmitted, the second communication device is assisted in determining a CBG that needs to be retransmitted in the second TB. This avoids retransmission of the entire TB when a part of CBs are incorrectly transmitted, and reduces resource consumption.

In a possible implementation, the CBG feedback information includes a second bitmap, bits in the second bitmap are in a one-to-one correspondence with CBGs included in the second TB, and the bits in the second bitmap indicate whether the corresponding CBGs in the second TB are correctly received.

According to the communication method provided in this implementation, the second bitmap indicates whether each CBG in the second TB is correctly received, so that the second communication device determines a location, in the second TB, of the at least one CBG that needs to be retransmitted, to facilitate subsequent retransmission of a corresponding CBG.

In a possible implementation, the first information further includes a sequence number of the first TB, and the sequence number of the first TB indicates that the first TB is the same as or different from a third TB sent by the first communication device to the second communication device last time.

In a possible implementation, the first information includes a control part, the control part includes control information, and the control information includes at least one of the following: the transmission indication information, the CBG feedback information, the sequence number of the first TB, and information about a reference signal density corresponding to the at least one first CBG.

In a possible implementation, the control part further includes a first cyclic redundancy check CRC field, and the first CRC field is used to check the control information.

In a possible implementation, the first information further includes a data part, and the data part includes the at least one first CBG.

In a possible implementation, the control part further includes a first scrambling code, and the first scrambling code is used to scramble the first CRC.

In a possible implementation, the control part is coded by using a polar code.

In a possible implementation, the data part is coded by using a polar code.

In a possible implementation, the method further includes: The first communication device receives configuration information sent by a third communication device, where the configuration information indicates the first communication device to configure a first transmission mode. That the first communication device sends the first information to the second communication device includes: The first communication device sends the first information to the second communication device in the first transmission mode.

According to the communication method provided in this implementation, the first communication device may enter the first transmission mode based on a configuration of the third communication device, to transmit the first TB based on a CBG, and perform CBG-based feedback on the received second TB, to avoid transmitting the entire TB. This improves transmission efficiency and reduces resource consumption.

According to a second aspect, an embodiment of this application provides a communication method, including: A second communication device receives first information sent by a first communication device. The first information includes transmission indication information and at least one first CBG of a first TB, and the transmission indication information indicates a length of the first TB and/or a location of the at least one first CBG in the first TB.

In a possible implementation, the transmission indication information includes information indicating that the at least one first CBG is all or a part of CBGs of the first TB.

In a possible implementation, when the at least one first CBG is all the CBGs of the first TB, the transmission indication information includes information that indicates a length of the at least one first CBG and/or modulation and coding scheme information; or when the at least one first CBG is the part of CBGs of the first TB, the transmission indication information includes information about the location of the at least one first CBG in the first TB.

In a possible implementation, the transmission indication information includes a first bitmap, bits in the first bitmap are in a one-to-one correspondence with CBGs included in the first TB, and the bits in the first bitmap indicate whether the corresponding CBGs in the first TB are included in the at least one first CBG.

In a possible implementation, the transmission indication information includes a first field. When the first field is a first value, the at least one first CBG is the part of CBGs of the first TB; or when the first field is any value in a preset value set, the at least one first CBG is all the CBGs of the first TB. The preset value set does not include the first value.

In a possible implementation, when the first field is the any value in the preset value set, the first field indicates corresponding modulation and coding scheme information.

In a possible implementation, the transmission indication information further includes a second field. When the first field is the first value, the second field indicates the location of the at least one first CBG in the first TB; or when the first field is the any value in the preset value set, the second field indicates the length of the first TB.

In a possible implementation, when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

In a possible implementation, the first information further includes CBG feedback information, and the CBG feedback information indicates whether a CBG in a second TB sent by the second communication device last time is correctly received.

In a possible implementation, the CBG feedback information includes a second bitmap, bits in the second bitmap are in a one-to-one correspondence with CBGs included in the second TB, and the bits in the second bitmap indicate whether the corresponding CBGs in the second TB are correctly received.

In a possible implementation, the first information further includes a sequence number of the first TB, and the sequence number of the first TB indicates that the first TB is the same as or different from a third TB sent by the first communication device to the second communication device last time.

In a possible implementation, the first information includes a control part, the control part includes control information, and the control information includes at least one of the following: the transmission indication information, the CBG feedback information, the sequence number of the first TB, and information about a reference signal density corresponding to the at least one first CBG.

In a possible implementation, the control part further includes a first CRC field, and the first CRC field is used to check the control information.

In a possible implementation, the first information further includes a data part, the data part includes a protocol data unit PDU, and the PDU includes the at least one first CBG.

In a possible implementation, the control part further includes a first scrambling code, and the first scrambling code is used to scramble the first CRC.

In a possible implementation, the control part is coded by using a polar code.

In a possible implementation, the data part is coded by using a polar code.

In a possible implementation, the method further includes: The second communication device receives configuration information sent by a fourth communication device, where the configuration information indicates the second communication device to configure a first transmission mode. That the second communication device receives the first information sent by the first communication device includes: The second communication device receives the first information sent by the first communication device in the first transmission mode.

For beneficial effects of the communication method provided in the second aspect and the possible implementations of the second aspect, refer to beneficial effects brought by the first aspect and the possible implementations of the first aspect. Details are not described herein again.

According to a third aspect, an embodiment of this application provides a communication apparatus, including: a sending unit, configured to send first information to a second communication device. The first information includes transmission indication information and at least one first code block group CBG of a first transport block TB, and the transmission indication information indicates a length of the first TB and/or a location of the at least one first CBG in the first TB.

In a possible implementation, the transmission indication information includes information indicating that the at least one first CBG is all or a part of CBGs of the first TB.

In a possible implementation, when the at least one first CBG is all the CBGs of the first TB, the transmission indication information includes information that indicates the length of the first TB and/or modulation and coding scheme information; or when the at least one first CBG is the part of CBGs of the first TB, the transmission indication information includes information about the location of the at least one first CBG in the first TB.

In a possible implementation, the transmission indication information includes a first bitmap, bits in the first bitmap are in a one-to-one correspondence with CBGs included in the first TB, and the bits in the first bitmap indicate whether the corresponding CBGs in the first TB are included in the at least one first CBG.

In a possible implementation, the transmission indication information includes a first field. When the first field is a first value, the at least one first CBG is the part of CBGs of the first TB; or when the first field is any value in a preset value set, the at least one first CBG is all the CBGs of the first TB. The preset value set does not include the first value.

In a possible implementation, when the first field is the any value in the preset value set, the first field indicates corresponding modulation and coding scheme information.

In a possible implementation, the transmission indication information further includes a second field. When the first field is the first value, the second field indicates the location of the at least one first CBG in the first TB; or when the first field is the any value in the preset value set, the second field indicates the length of the first TB.

In a possible implementation, when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

In a possible implementation, the first information further includes CBG feedback information, and the CBG feedback information indicates whether a CBG in a second TB sent by the second communication device last time is correctly received.

In a possible implementation, the CBG feedback information includes a second bitmap, bits in the second bitmap are in a one-to-one correspondence with CBGs included in the second TB, and the bits in the second bitmap indicate whether the corresponding CBGs in the second TB are correctly received.

In a possible implementation, the first information further includes a sequence number of the first TB, and the sequence number of the first TB indicates that the first TB is the same as or different from a third TB sent by the first communication device to the second communication device last time.

In a possible implementation, the first information includes a control part, the control part includes control information, and the control information includes at least one of the following: the transmission indication information, the CBG feedback information, the sequence number of the first TB, and information about a reference signal density corresponding to the at least one first CBG.

In a possible implementation, the control part further includes a first cyclic redundancy check CRC field, and the first CRC field is used to check the control information.

In a possible implementation, the first information further includes a data part, and the data part includes the at least one first CBG.

In a possible implementation, the control part further includes a first scrambling code, and the first scrambling code is used to scramble the first CRC.

In a possible implementation, the control part is coded by using a polar code.

In a possible implementation, the data part is coded by using a polar code.

In a possible implementation, the communication apparatus further includes: a receiving unit, configured to receive configuration information sent by a third communication device. The configuration information indicates the first communication device to configure a first transmission mode. The sending unit is specifically configured to send the first information to the second communication device in the first transmission mode.

In a possible implementation, the sending unit is further configured to send configuration information to the second communication device. The configuration information indicates the second communication device to configure a first transmission mode, and the first transmission mode is used to transmit the first information.

According to a fourth aspect, an embodiment of this application provides a communication apparatus, including: a receiving unit, configured to receive first information sent by a first communication device. The first information includes transmission indication information and at least one first CBG of a first TB, and the transmission indication information indicates a length of the first TB and/or a location of the at least one first CBG in the first TB.

In a possible implementation, the transmission indication information includes information indicating that the at least one first CBG is all or a part of CBGs of the first TB.

In a possible implementation, when the at least one first CBG is all the CBGs of the first TB, the transmission indication information includes information that indicates a length of the at least one first CBG and/or modulation and coding scheme information; or when the at least one first CBG is the part of CBGs of the first TB, the transmission indication information includes information about the location of the at least one first CBG in the first TB.

In a possible implementation, the transmission indication information includes a first bitmap, bits in the first bitmap are in a one-to-one correspondence with CBGs included in the first TB, and the bits in the first bitmap indicate whether the corresponding CBGs in the first TB are included in the at least one first CBG.

In a possible implementation, the transmission indication information includes a first field. When the first field is a first value, the at least one first CBG is the part of CBGs of the first TB; or when the first field is any value in a preset value set, the at least one first CBG is all the CBGs of the first TB. The preset value set does not include the first value.

In a possible implementation, when the first field is the any value in the preset value set, the first field indicates corresponding modulation and coding scheme information.

In a possible implementation, the transmission indication information further includes a second field. When the first field is the first value, the second field indicates the location of the at least one first CBG in the first TB; or when the first field is the any value in the preset value set, the second field indicates the length of the first TB.

In a possible implementation, when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

In a possible implementation, the first information further includes CBG feedback information, and the CBG feedback information indicates whether a CBG in a second TB sent by the second communication device last time is correctly received.

In a possible implementation, the CBG feedback information includes a second bitmap, bits in the second bitmap are in a one-to-one correspondence with CBGs included in the second TB, and the bits in the second bitmap indicate whether the corresponding CBGs in the second TB are correctly received.

In a possible implementation, the first information further includes a sequence number of the first TB, and the sequence number of the first TB indicates that the first TB is the same as or different from a third TB sent by the first communication device to the second communication device last time.

In a possible implementation, the first information includes a control part, the control part includes control information, and the control information includes at least one of the following: the transmission indication information, the CBG feedback information, the sequence number of the first TB, and information about a reference signal density corresponding to the at least one first CBG.

In a possible implementation, the control part further includes a first CRC field, and the first CRC field is used to check the control information.

In a possible implementation, the first information further includes a data part, the data part includes a protocol data unit PDU, and the PDU includes the at least one first CBG.

In a possible implementation, the control part further includes a first scrambling code, and the first scrambling code is used to scramble the first CRC.

In a possible implementation, the control part is coded by using a polar code.

In a possible implementation, the data part is coded by using a polar code.

In a possible implementation, the receiving unit is further configured to receive configuration information sent by a fourth communication device. The configuration information indicates the second communication device to configure a first transmission mode. The receiving unit is specifically configured to send the first information to the second communication device in the first transmission mode.

In a possible implementation, the communication apparatus further includes a sending unit, configured to send configuration information to the first communication device. The configuration information indicates the first communication device to configure a first transmission mode, and the first transmission mode is used to transmit the first information.

According to a fifth aspect, an embodiment of this application provides a communication device, including a processor and a memory. The memory is configured to store a computer program, and the processor is configured to invoke and run the computer program stored in the memory, to perform the method according to the first aspect or the possible implementations of the first aspect.

According to a sixth aspect, an embodiment of this application provides a communication device, including a processor and a memory. The memory is configured to store a computer program, and the processor is configured to invoke and run the computer program stored in the memory, to perform the method according to the second aspect or the possible implementations of the second aspect.

According to a seventh aspect, an embodiment of this application provides a chip, including a processor, configured to invoke computer instructions from a memory and run the computer instructions, so that a device in which the chip is installed performs the method according to the first aspect or the possible implementations of the first aspect.

According to an eighth aspect, an embodiment of this application provides a chip, including a processor, configured to invoke computer instructions from a memory and run the computer instructions, so that a device in which the chip is installed performs the method according to the second aspect or the possible implementations of the second aspect.

According to a ninth aspect, an embodiment of this application provides a computer-readable storage medium, configured to store computer program instructions. The computer program enables a computer to perform the method according to the first aspect or the possible implementations of the first aspect.

According to a tenth aspect, an embodiment of this application provides a computer-readable storage medium, configured to store computer program instructions. The computer program enables a computer to perform the method according to the second aspect or the possible implementations of the second aspect.

According to an eleventh aspect, an embodiment of this application provides a computer program product, including computer program instructions. The computer program instructions enable a computer to perform the method according to the first aspect or the possible implementations of the first aspect.

According to a twelfth aspect, an embodiment of this application provides a computer program product, including computer program instructions. The computer program instructions enable a computer to perform the method according to the second aspect or the possible implementations of the second aspect.

According to a thirteenth aspect, an embodiment of this application provides a terminal, including the communication apparatus according to the third aspect or the possible implementations of the third aspect.

According to a fourteenth aspect, an embodiment of this application provides a terminal, including the communication apparatus according to the fourth aspect or the possible implementations of the fourth aspect.

### BRIEF DESCRIPTION OF DRAWINGS

FIG. 1 is a schematic diagram of a wireless communication system of an intelligent cockpit according to an embodiment of this application;
FIG. 2 is a schematic diagram of a frame structure of Bluetooth according to an embodiment of this application;
FIG. 3 is a schematic diagram of another frame structure of Bluetooth according to an embodiment of this application;
FIG. 4 is a schematic diagram of a communication system 100 according to an embodiment of this application;
FIG. 5 is a schematic flowchart of a wireless communication method 200 according to an embodiment of this application;
FIG. 6 is a schematic flowchart of interaction in a communication method 300 according to an embodiment of this application;
FIG. 7 is a schematic flowchart of interaction in a communication method 400 according to an embodiment of this application;
FIG. 8 is a schematic diagram of a structure of a communication apparatus 500 according to an embodiment of this application; and
FIG. 9 is another schematic block diagram of a communication apparatus 600 according to an embodiment of this application.

### DESCRIPTION OF EMBODIMENTS

It should be understood that, the term "and/or" in embodiments of this application describes only an association relationship for describing associated objects and represents that three relationships may exist. For example, A and/or B may represent the following three cases: Only A exists, both A and B exist, and only B exists. In addition, a character "/" in this specification generally indicates an "or" relationship between associated objects.

It should be understood that, although terms such as "first", "second", and "third" may be used in embodiments of the present invention to describe a CBG or a TB, the CBG or the TB should not be limited to these terms. These terms are merely used to distinguish the CBG or the TB from each other. For example, without departing from the scope of embodiments of this application, a first CBG may also be referred to as a second CBG, and similarly, a second CBG may also be referred to as a first CBG.

As global communication technologies continuously develop, development and application of wireless communication technologies, with a development trend in full swing, have surpassed those of wired communication technologies. Intelligent devices such as an intelligent transportation device, a smart home device, and a robot gradually enter people's daily life.

In wireless communication scenarios of the intelligent devices, there may be a plurality of communication domains in a specific communication area or range. The communication domain usually refers to a system including a group of communication nodes having communication relationships and communication connection relationships (namely, communication links) between the communication nodes. One communication domain includes one primary communication node (which may be referred to as a primary node for short) and at least one secondary communication node (which may be referred to as a secondary node for short). The primary node manages a time-frequency resource of the communication domain, and has a function of scheduling resources for the communication links between the communication nodes in the communication domain.

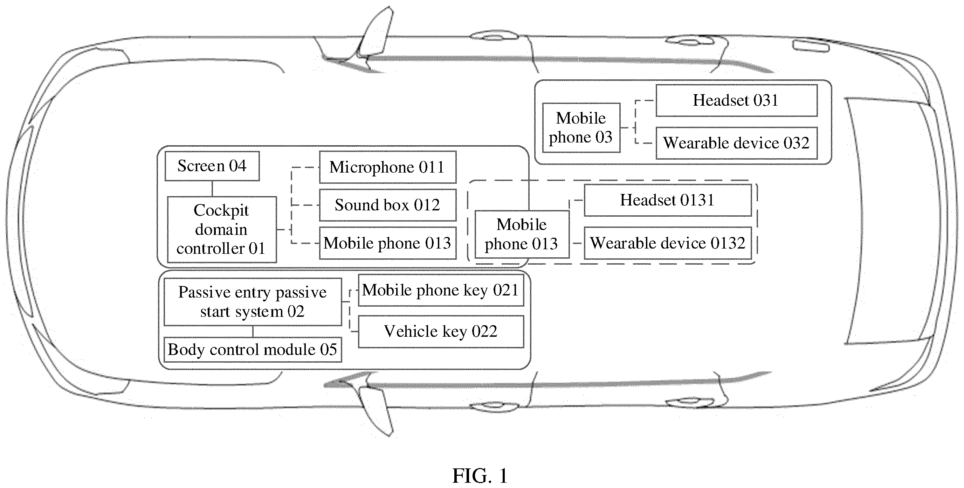

A wireless communication system of an intelligent cockpit is used as an example. For example, a topology relationship of a communication link in a vehicle is shown in FIG. 1. There are a plurality of communication domains in the vehicle. One communication domain includes one primary node and at least one secondary node. For example, the primary node may be a cockpit domain controller (Cockpit Domain Controller, CDC) 01, a passive entry passive start (Passive Entry Passive Start, PEPS) system 02, or a mobile phone 03. Each primary node is connected to the at least one secondary node in a wireless manner. For example, each primary node is connected to the at least one secondary node through a Bluetooth communication link. For example, the CDC 01 is connected to a microphone 011, a sound box 012, and a mobile phone 013, the PEPS 02 is connected to a mobile phone key 021 and a vehicle key 022, and the mobile phone 03 is connected to a headset 031 and a wearable device 032. The mobile phone 013 that serves as a secondary node of the CDC 01 serves as a primary node of a headset 0131 and a wearable device 0132 to be connected to the headset 0131 and the wearable device 0132.

With reference to FIG. 1, for example, the CDC 01 is further connected to a screen 04 in a wired or wireless manner, and the PEPS 02 is further connected to a body control module (Body Control Module, BCM) 05 in a wired or wireless manner. The primary node schedules the secondary node to implement data transmission between nodes.

Embodiments of this application may be executed by the foregoing communication node in any communication system. Technical solutions in embodiments of this application may be applied to various communication systems, for example, Wi-Fi, Bluetooth low energy (Bluetooth Low Energy, BLE), a wireless local area network (Wireless Local Area Network, WLAN), a mobile communication network, a near field communication (Near Field Communication, NFC) network, an ultra-wideband (Ultra-wideband, UWB) network, an infrared network, a microwave communication network, a millimeter-wave communication network, and a free space optical communication network. Embodiments of this application may also be applied to device-to-device (Device-to-Device, D2D) communication, machine-to-machine (Machine-to-Machine, M2M) communication, machine type communication (Machine Type Communication, MTC), vehicle-to-vehicle (Vehicle-to-Vehicle, V2V) communication, vehicle-to-everything (Vehicle-to-everything, V2X) communication, or the like.

In embodiments of this application, "protocol" may be a standard protocol in the communication field, for example, the "protocol" may include an LTE protocol, an NR protocol, a Bluetooth protocol, and a related protocol applied to a future communication system. This is not limited in this application.

For better understanding of embodiments of this application, a Bluetooth low energy technology related to this application is described.

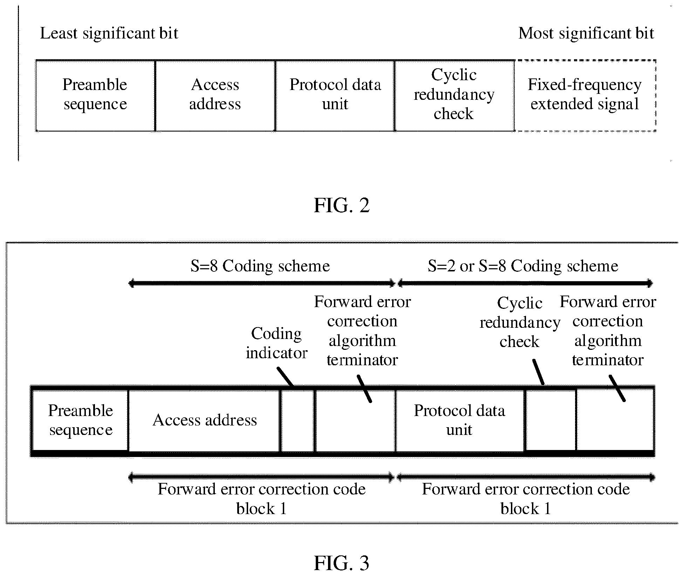

In the Bluetooth low energy technology, a frame is transmitted each time. The frame has the following frame structure that the frame is coded or is not coded. Cyclic redundancy check (Cyclic Redundancy Check, CRC) is used to check a protocol data unit (Protocol Data Unit, PDU). Refer to FIG. 2 and FIG. 3.

The PDU includes two parts: a packet header and a payload, and the packet header includes a plurality of types of transmission control information, including the following.

### (1) A sequence number (Sequence Number, SN) of the PDU

When a payload sent in the PDU is retransmission of a payload sent by a device last time, a sequence number of the PDU sent this time is the same as a sequence number of the PDU sent by the device last time. When a payload in the PDU sent this time is new transmission, a sequence number of the PDU sent this time is different from a transmission sequence number sent by the device last time. The information may be used by the device that receives the PDU to determine whether to deliver the PDU to a higher layer of a protocol stack after correctly receiving the PDU. For example, if the sequence number of the PDU is the same as that of the PDU correctly received last time, there is no need to deliver repeatedly; or if the sequence number of the PDU is different from that of the PDU correctly received last time, delivery is needed.

### (2) A next expected sequence number (Next Expected Sequence Number, NESN), namely, the sequence number of the PDU sent from an opposite side next time

The information is used to assist a device that correctly receives the information in determining whether a payload of a previously sent PDU or a newly sent payload should be retransmitted for subsequent transmission.

It can be learned from the foregoing content that, when bidirectional link transmission is performed through the Bluetooth low energy technology, a communication device can only send all payloads in the PDU to the opposite side. As a result, transmission efficiency is reduced and resources and power consumption are wasted.

Based on the foregoing problem, in this embodiment of this application, the PDU is divided into a plurality of transmission subunits, and each transmission subunit includes a part of all payloads. Some or all of the plurality of transmission subunits are transmitted based on transmission information, and transmission indication information in the transmission information indicates a length of the PDU and/or that each transmission subunit is a specific transmission subunit in the plurality of transmission subunits obtained by dividing the PDU (that is, a location of the subunit in the PDU), to avoid a problem that transmission efficiency is low, transmission resources are large and power consumption are high because all payloads in the PDU are always transmitted between communication devices.

In this embodiment of this application, for the foregoing problem that the communication devices always transmit all the payloads of the PDU, first information is introduced in an information transmission process of the two communication devices. Based on the first information, a transmit end may send at least one CBG of a TB to a receive end, and the first information may indicate a length of the at least one CBG and/or a location of the at least one CBG in the TB. Based on the first information, the complete TB does not need to be always transmitted between the two communication devices. This reduces information transmission duration, improves transmission efficiency, and reduces resource consumption, to reduce power consumption of the communication devices.

It should be noted that, in a wireless communication field, the TB may be a transmission unit at a physical layer, for example, the PDU transmitted in the Bluetooth low energy technology. One TB may be divided into a plurality of CBs for coding, one or more CBs form one CBG, and one or more CBGs form the TB. The CB or the CBG includes an independent parity bit used by the receive end to determine whether the CB or the CBG is correctly received.

In this embodiment of this application, the location of the at least one CBG in the TB may be that each of the at least one CBG corresponds to a specific CBG in the TB, for example, a rank of a CBG in the TB.

It should be noted that the information transmission method provided in this application is not limited to the field of Bluetooth transmission technologies, and the method is applicable to any field of communication technologies.

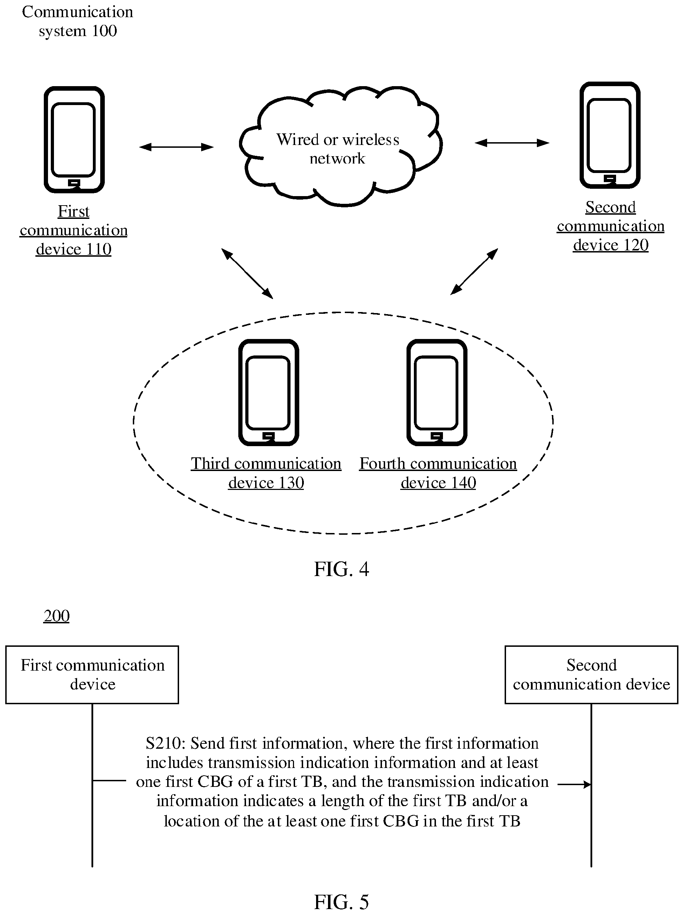

FIG. 4 is a schematic diagram of a communication system 100 according to an embodiment of this application. As shown in FIG. 4, the communication system 100 may include a first communication device 110 and a second communication device 120. The first communication device 110 and the second communication device 120 are connected in a wired or wireless manner.

Optionally, the first communication device 110 and/or the second communication device 120 may be terminal devices/a terminal device, for example, a mobile phone, a tablet computer, a computer, a smart vehicle, a wireless local loop (Wireless Local Loop, WLL) station, a personal digital assistant (Personal Digital Assistant, PDA) device, a handheld device with a wireless communication function, a computing device, another processing device connected to a wireless modem, a vehicle-mounted device, or an intelligent wearable device.

Optionally, the first communication device 110 and/or the second communication device 120 may also be servers/a server.

In some embodiments, both the first communication device 110 and the second communication device 120 may be a secondary node. In some other embodiments, the first communication device 110 and the second communication device 120 may be respectively a primary node and a secondary node. For example, the first communication device 110 is a primary node of the second communication device 120, or the second communication device 120 is a primary node of the first communication device 110.

In some embodiments, the communication system 100 further includes a third communication device 130, and the third communication device 130 is connected to the first communication device 110 in a wired or wireless manner. Optionally, the third communication device may be any one of the foregoing terminal devices, or may be a server or a network device. Optionally, the third communication device 130 may be a primary node of the first communication device 110.

In some embodiments, the communication system 100 further includes a fourth communication device 140, and the fourth communication device 140 is connected to the second communication device 120 in a wired or wireless manner. The fourth communication device 140 may be any one of the foregoing terminal devices, or may be a server or a network device. Optionally, the fourth communication device 140 may be a primary node of the second communication device 120.

Optionally, the third communication device 130 and the fourth communication device 140 may be a same communication device. When the third communication device 130 and the fourth communication device 140 are a same communication device, the communication device may be connected to the first communication device 110 and the second communication device 120 in a wired or wireless manner. Optionally, the communication device is a primary node of the first communication device 110 and the second communication device 120, and the first communication device 110 and the second communication device 120 each are a secondary node of the communication device.

The following describes technical solutions of this application in detail by using specific embodiments.

FIG. 5 is a schematic flowchart of a wireless communication method 200 according to an embodiment of this application. As shown in FIG. 5, the method 200 may include at least a part of the following content.

S210: A first communication device sends first information to a second communication device, where the first information includes transmission indication information and at least one first CBG of a first TB, and the transmission indication information indicates a length of the first TB and/or a location of the at least one first CBG in the first TB.

Correspondingly, the second communication device receives the first information.

Optionally, the at least one first CBG in the first information may be all CBGs of the first TB, or may be a part of CBGs of the first TB. It may be understood that when the at least one first CBG is all the CBGs of the first TB, the first information includes the first TB. Optionally, the at least one first CBG in the first information may be initially transmitted, or may be retransmitted.

It should be noted that the first information sent by the first communication device includes the transmission indication information, and the transmission indication information may indicate the length of the first TB and/or the location of the at least one first CBG in the first TB, so that the second communication device can decode each CB in the at least one first CBG based on the indicated length of the first TB and the indicated location of the at least one first CBG in the first TB. Alternatively, when the at least one first CBG is retransmission information of the first TB, retransmission combination is performed on the first TB. For example, the second communication device may perform, based on the location of the at least one first CBG in the first TB, retransmission combination on a CBG that corresponds to a first CBG in the first TB and that is previously transmitted (for example, during initial transmission), and CBG-based retransmission combination is performed on each CB in the first CBG and each CB in the corresponding CBG.

In this embodiment of this application, the transmission indication information indicates the location of the at least one first CBG in the first TB, that is, the transmission indication information indicates CBGs that are of the first TB and that are transmitted in the first information.

For example, the first TB includes at least one CBG, and the at least one CBG is in a sequence in the first TB. In this case, each first CBG should have a specific location in all CBGs of the first TB. The transmission indication information indicates a location of each of the at least one first CBG in all the CBGs of the first TB.

For example, if the first TB sequentially includes eight CBs, and every two CBs form one CBG, the first TB sequentially includes four CBGs. If a first message includes the second CBG and the third CBG, the transmission indication information indicates that the second CBG and the third CBG of the first TB are transmitted in the first message.

The length of the first TB may be a length before coding, namely, a length of valid information.

Generally, when the first information includes a part of CBGs of the first TB, the at least one first CBG in the first information is usually retransmitted, but a case in which the part of CBGs of the first TB are initially transmitted is not excluded. When the first information includes all CBGs of the first TB, the at least one first CBG in the first information is usually initially transmitted, but retransmission is not excluded. For example, when all the CBGs of the first TB are incorrectly transmitted during initial transmission, all the CBGs of the first TB need to be retransmitted. In this case, the transmission indication information in this embodiment of this application may include different indication information in the foregoing different scenarios. For example, when the at least one first CBG is initially transmitted and is a part of CBGs of the first TB, the second communication device needs to obtain a length of the first TB and a location of each first CBG in the first TB to decode the at least one CBG. In this case, the transmission indication information indicates the length of the first TB and a location of the at least one first CBG in the first TB. When the at least one CBG is retransmitted and is a part of CBGs of the first TB, the second communication device has obtained a length of the first TB when receiving the initially transmitted first TB, and only needs to obtain a location of each first CBG in the first TB to decode the at least one CBG, and subsequently perform retransmission and combination. In this case, the transmission indication information may indicate only the location of the at least one first CBG in the first TB, to reduce resource consumption. When the at least one CBG is initially transmitted and is all CBGs of the first TB, the second communication device needs to obtain a length of the first TB, to decode the first TB. In this case, the transmission indication information may indicate only the length of the first TB, to reduce resource consumption. When the at least one CBG is retransmitted and is all CBGs of the first TB, the second communication device has obtained a length of the first TB when receiving the initially transmitted first TB, and can decode the first TB without determining a location of a first CBG in the first TB. In this case, this embodiment does not have a requirement on specific content of the transmission indication information, and less information indicated by the transmission indication information means lower resource consumption.

In this embodiment of this application, the first communication device sends the at least one first CBG of the first TB to the second communication device, and indicates the length of the first TB and/or the location of the at least one first CBG in the first TB based on the transmission indication information. Compared with the conventional technology in which the entire TB is always transmitted, this embodiment of this application improves transmission efficiency and reduces resource consumption.

Based on the embodiment shown in FIG. 5, the transmission indication information may include information indicating that the at least one first CBG is all or a part of CBGs of the first TB. For example, a first field may indicate that the at least one first CBG is all or a part of CBGs of the first TB.

For example, when the first field is a first value, the at least one first CBG is the part of CBGs of the first TB; or when the first field is not a first value, the at least one first CBG is all the CBGs of the first TB. Alternatively, when the first field is a first value, the at least one first CBG is the part of CBGs of the first TB; or when the first field is a second value, the at least one first CBG is all the CBGs of the first TB. Alternatively, when the first field is a first value, the at least one first CBG is the part of CBGs of the first TB; or when the first field is any value in a preset value set, the at least one first CBG is all the CBGs of the first TB, where the preset value set does not include the first value.

Optionally, the first field may be a modulation and coding scheme (Modulation and Coding Scheme, MCS) field. Optionally, any one of the first value, the second value, and the any value in the preset value set may be an index identifier in an MCS mapping relationship.

For example, the first value may be 15, and the preset value set may be [0 to 10] including 11 values. When the MCS field is 15, the at least one first CBG in the first information is a part of CBGs of the first TB. When the MCS field is any value in 0 to 10, the at least one first CBG in the first information is all CBGs of the first TB.

Optionally, a field length of the first field may be 4 bits.

In this embodiment, the at least one CBG transmitted in the first information may be accurately indicated based on the information indicating that the at least one CBG is a part of or all CBGs of the first TB in the transmission indication information, so that the second communication device identifies whether the at least one CBG is a complete first TB, to obtain the first TB through subsequent combination.

Based on any one of the foregoing embodiments, it should be understood that the transmission indication information may be information generated by the first communication device for at least one CBG to be transmitted. The following describes, by using examples, information included in the transmission indication information in two cases in which the at least one first CBG in the first information is all or a part of CBGs of the first TB. The following includes at least two possible implementations. In implementation 1, the transmission indication information does not include information indicating that the at least one first CBG is all or a part of CBGs of the first TB. In Implementation 2, the transmission indication information includes the information indicating that the at least one first CBG is all or a part of CBGs of the first TB.

The implementation 1: Regardless of whether the at least one first CBG is all or a part of CBGs of the first TB, the transmission indication information includes information that indicates a length of the first TB and/or modulation and coding scheme information, and information of a location of the at least one CBG in the first TB. When the at least one first CBG is all the CBGs of the first TB, the information about the location of the at least one CBG in the first TB indicates that the at least one CBG is all the CBGs of the first TB.

For example, in this embodiment, the modulation and coding scheme of the first TB may be indicated by the first field. The modulation and coding scheme includes a modulation scheme and a coding scheme. For example, the modulation scheme may include binary phase shift keying (Binary Phase Shift Keying, BPSK), quadrature phase shift keying (Quadrature Phase Shift Keying, QPSK), 16-quadrature amplitude modulation (Quadrature Amplitude Modulation, QMA), 8 phase shift keying (8 Phase Shift Keying, 8PSK), and the like. The coding scheme includes whether to perform coding and/or a code rate. For example, a value of the first field has a corresponding modulation and coding scheme in a preset mapping relationship. For example, the first field may be an MCS field, a value of the MCS field is used as an index of an MCS mapping relationship, and there is a corresponding modulation scheme and a corresponding coding scheme in the MCS mapping relationship. For example, when the MCS field is 0, a corresponding modulation scheme is BPSK, and when the MCS field is 1 or 2, a corresponding modulation scheme is QPSK.

Optionally, in the implementation 1, the first information may indicate the length of the first TB based on a second field, and indicate the location of the at least one first CBG in the first TB based on a third field. The third field and the second field may be different fields.

Optionally, a field length of the second field may be 11 bits.

Optionally, a field length of the third field is related to a quantity of CBGs included in the first TB. A larger quantity of CBGs included in the first TB indicates a longer field length of the third field. For example, if the first TB includes eight CBGs, the field length of the third field is 8 bits.

Implementation 2: When the at least one first CBG in the first information is all CBGs of the first TB, the transmission indication information includes information indicating that the at least one first CBG is all or a part of CBGs of the first TB, and the information indicates that the at least one first CBG is all the CBGs of the first TB. In this case, the transmission indication information further includes information that indicates a length of the first TB and/or modulation and coding scheme information. When the at least one CBG in the first information is a part of CBGs of the first TB, the transmission indication information still includes information indicating that the at least one first CBG is all or a part of CBGs of the first TB, and the information indicates that the at least one first CBG is the part of CBGs of the first TB. In this case, the transmission indication information further includes information of a location of the at least one first CBG in the first TB.

The information indicating that the at least one first CBG is all or a part of CBGs of the first TB may be any field, for example, may be a fourth field. To clearly describe this embodiment, the following uses an example in which the information indicating that the at least one first CBG is all or a part of CBGs of the first TB is an MCS field for description.

For example, if the MCS field is a first value, a second field in the transmission indication information indicates a location of the at least one first CBG in the first TB. If the MCS field is any value in a preset value set, the second field indicates a length of the first TB, and a value of the MCS field may indicate a modulation scheme and a coding scheme of the first TB.

For example, when the MCS field in the transmission indication information is 15, a second field in the transmission indication information indicates a location of the at least one first CBG in the first TB. When the MCS field in the transmission indication information is any value in a set [0 to 10], the second field indicates a length of the first TB. In this case, assuming that the MCS field is 1, a modulation and coding scheme is a modulation and coding scheme corresponding to an index 1 in an MCS mapping relationship.

Optionally, in this embodiment, in addition to multiplexing bits in the second field to indicate the length of the first TB or the location of the at least one first CBG in the first TB, the second field and the third field may respectively indicate the length of the first TB and the location of the at least one first CBG in the first TB.

For example, when the at least one first CBG is all CBGs of the first TB, the second field may indicate the length of the first TB. When the at least one first CBG is a part of CBGs of the first TB, the third field may indicate the location of the at least one first CBG in the first TB. The third field and the second field are different fields.

It should be noted that, that the MCS field indicates that the at least one first CBG is all or a part of CBGs of the first TB is merely an example, and is not a limitation.

In this embodiment, in two different cases, that is, when the transmitted at least one CBG is all or a part of CBGs of the first TB, information that needs to be indicated is indicated based on different transmission indication information. This ensures that the second communication device can correctly receive the at least one CBG based on the transmission indication information, to reduce resource consumption.

Based on any one of the foregoing embodiments, the transmission information includes a first bitmap, and the first bitmap may indicate a location of the at least one CBG in the first TB in the foregoing embodiment. For example, bits in the first bitmap are in a one-to-one correspondence with CBGs included in the first TB, and each bit in the first bitmap indicates whether a corresponding CBG in the first TB is included in the at least one first CBG.

For example, when a bit in the first bitmap is a second value, a CBG corresponding to the bit is included in at least one first CBG; or when a bit in the first bitmap is a third value, a CBG corresponding to the bit is not included in at least one first CBG. Optionally, the second value is different from the third value. For example, the second value is 1, and the third value is 0, or the second value is 0, and the third value is 1.

For example, as shown in Table 1:

**Table 1**

| CBG 1 | CBG 2 | CBG 3 | CBG 4 | CBG 5 | CBG 6 | CBG 7 | CBG 8 |
|---|---|---|---|---|---|---|---|
| 1 | 0 | 0 | 1 | 1 | 0 | 0 | 0 |

A quantity of bits in the first bitmap should be consistent with a quantity of CBGs in the first TB. It is assumed that the first TB includes eight CBGs, and each bit in Table 1 corresponds to one CBG. It is assumed that the second value is 1, and the third value is 0. In this case, a CBG 1, a CBG 4, and a CBG 5 in Table 1 each are at least one first CBG included in the first information, and remaining CBGs are not included in the at least one first CBG.

For example, the first bitmap may be the second field or a part of the second field. For example, if a field length of the second field is 11 bits, and a field length of the first bitmap is 8 bits, the second field includes the first bitmap, and further includes a reserved bit of 3 bits.

Optionally, when the second field includes the reserved bit, the reserved bit may indicate a modulation and coding scheme and/or a redundancy version of the at least one CBG.

In some embodiments, before the first communication device sends the first information to the second communication device, the first communication device may receive a second TB sent by the second communication device, and the second TB includes a plurality of CBGs. The first information sent by the first communication device to the second communication device may further include CBG feedback information for the second TB, and the CBG feedback information indicates whether CBGs in the second TB sent by the second communication device last time are correctly received. For example, the CBG feedback information includes a second bitmap, bits in the second bitmap are in a one-to-one correspondence with CBGs included in the second TB, and the bits in the first bitmap indicate whether the corresponding CBGs in the second TB are correctly received by the first communication device.

For example, when a bit in the second bitmap is a fourth value, a CBG corresponding to the bit is correctly received. This indicates that each CB in CBGs is correctly received. When a bit in the first bitmap is a fifth value, a CBG corresponding to the bit is not correctly received. This indicates that at least one CBG that is not correctly received exists in the CBGs. Optionally, the fourth value is different from the fifth value. For example, the fourth value is 1 and the fifth value is 0, or the fourth value is 0 and the fifth value is 1.

Still refer to Table 1. A quantity of bits in the second bitmap should be consistent with a quantity of CBGs in the second TB. It is assumed that the second TB includes eight CBGs, and each bit in Table 1 corresponds to one CBG. It is assumed that the fourth value is 0, and the fifth value is 1. In this case, a CBG 1, a CBG 4, and a CBG 5 in Table 1 are CBGs that are not correctly received, and remaining CBGs are CBGs that are correctly received.

It may be understood that, if all bits in the second bitmap are fourth values, it indicates that the second TB is correctly received, that is, it indicates that the second communication device is expected not to retransmit any CBG in the second TB, but to transmit a new TB; or if all bits in the second bitmap are fifth values, it indicates that the second communication device is expected to retransmit the entire second TB, that is, to retransmit all CBGs in the second TB.

In this embodiment, the first communication device may feed back, based on the CBG feedback information in the first information, the second TB sent by the second communication device last time, to assist the second communication device in determining whether a new TB should be transmitted or the second TB needs to be retransmitted next time. Further, when the second TB needs to be retransmitted, the second communication device is assisted in determining a CBG that needs to be retransmitted in the second TB. This avoids retransmission of the entire TB when a part of CBs are incorrectly transmitted, and reduces resource consumption.

In some embodiments, the first information further includes an SN of the first TB. It should be noted that the SN of the first TB indicates that the first TB is the same as or different from a third TB sent by the first communication device to the second communication device last time. For example, when the first TB is the same as the third TB sent by the first communication device to the second communication device last time, the SN of the first TB is the same as an SN of the third TB sent by the first communication device to the second communication device last time; or when the first TB is different from the third TB sent by the first communication device to the second communication device last time, the SN of the first TB is different from an SN of the third TB sent by the first communication device to the second communication device last time.

To implement the first information mentioned in any one of the foregoing embodiments, this embodiment of this application provides a frame structure shown in Table 2 for the first information.

| Preamble sequence | Another sequence | Control information | CRC+scrambling code | PDU+CRC |
|---|---|---|---|---|
| Sequence part | | Control part | | Data part |

For example, with reference to Table 2, the first information may sequentially include the sequence part, the control part, and the data part. The sequence part may include a preamble sequence and another sequence, and is used to carry a sequence that is known to both a receive end and a transmit end before information is sent, and is used by the receive end to implement functions such as automatic gain control, synchronization, and channel estimation. Optionally, a length of the preamble sequence may be 8 us, and a length of the another sequence may be 31 bits.

The control part includes at least control information, and the control information includes at least one of the following: the transmission indication information in any one of the foregoing embodiments, the CBG feedback information in any one of the foregoing embodiments, the SN of the first TB, and information about a reference signal density corresponding to at least one first CBG.

In an example, the information included in the control information and a corresponding field length may be at least one of the following pieces of information:
(1) an SN of the first TB: A field length is 1 bit;
(2) CBG feedback information: a CBG acknowledge character (Acknowledge character, ACK) or negative acknowledge character (Negative acknowledge character, NACK) feedback, with a field length of 8 bits;
(3) a first field (MCS field): A field length is 4 bits;
(4) a second field: A field length is 11 bits, (when the MCS field is any value in a set [0, 10], the second field includes a length of valid data of a PDU, namely, a length of the first TB, 11 bits. 0 indicates an empty packet. When the MCS field is 15, at least one CBG is a part of CBGs in the first TB, and the second field includes a reserved bit of 3 bits and a first bitmap that is of 8 bits and that indicates a location of the at least one CBG in the first TB;) and
(5) a reference signal density of the data part: A field length is 3 bits.

With reference to Table 2, the control part further includes a first cyclic redundancy check (Cyclic Redundancy Check, CRC) field, and the first CRC field is used to check the control information. Optionally, the control part may further include a first scrambling code, and the first scrambling code is used to scramble the first CRC.

The first scrambling code may be an identifier of a transmission link or a transmission channel corresponding to the first information, or the first scrambling code may be an identifier of the first communication device, or the first scrambling code may be a sequence generated based on the identifier according to a predefined rule.

Optionally, a total length of the first CRC field and the first scrambling code may be 24 bits.

Currently, in a Bluetooth low energy technology, an SN, an NESN, and a TB are checked through same CRC. Before a PDU is decoded, whether a TB is a retransmitted TB or an initially transmitted TB cannot be determined. Therefore, a physical layer cannot perform retransmission and combination on the TB based on an SN. In addition, before the PDU is decoded, NESNs of same TBs may be different. When the NESN and the TB are checked through same CRC, retransmission and combination cannot be performed on the TB.

For the foregoing technical problem, in this embodiment, the control information is checked through the first CRC, so that CRC check can be independently performed on the control information. The control information is obtained through the check, to implement retransmission and combination of the first TB.

With reference to Table 2, the first information further includes a data part, and the data part includes at least one first CBG.

Optionally, the data part further includes second CRC, and the second CRC is used to check the at least one first CBG.

In some embodiments, the first information may not include the data part. For example, when the first communication device does not need to send a TB to the second communication device, and needs to perform CBG feedback based on only a received TB sent by the second communication device. The first information may include only control information, and the control information includes at least CBG feedback information.

In some embodiments, the control part and the data part may be separately coded by using a polar (Polar) code.

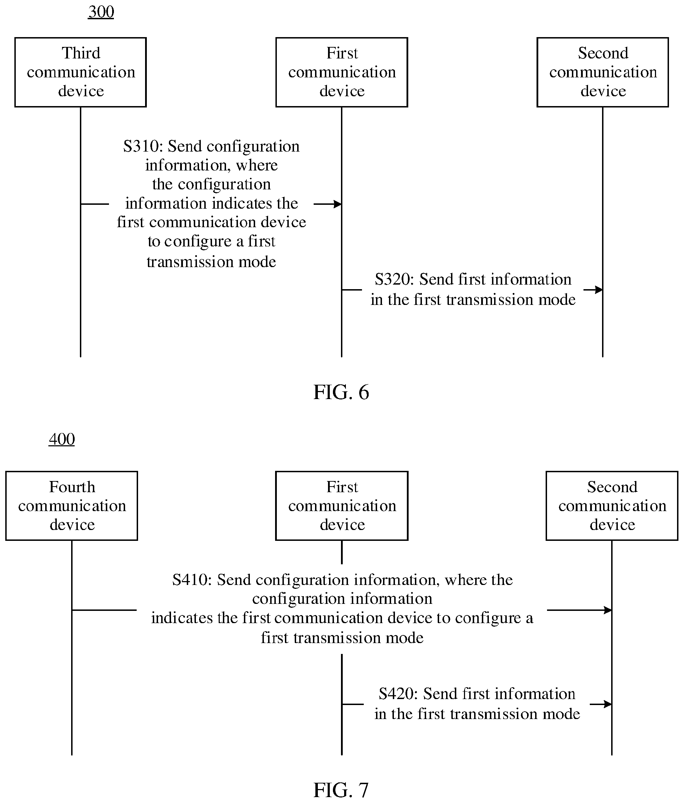

FIG. 6 is a schematic flowchart of interaction in a communication method 300 according to an embodiment of this application. As shown in FIG. 6, the method 300 includes the following steps:
S310: A third communication device sends configuration information to a first communication device, where the configuration information indicates the first communication device to configure a first transmission mode.

Correspondingly, the first communication device receives the configuration information.

S320: The first communication device sends first information to the second communication device in the first transmission mode.

Correspondingly, the second communication device receives the first information in the first transmission mode.

It should be noted that the first transmission mode is a CBG-based transmission mode. In the first transmission mode, the first communication device may send at least one first CBG of a first TB to the second communication device, instead of sending the entire first TB. In addition, the first communication device may receive at least one CBG of a second TB transmitted by the second communication device, instead of only receiving the entire second TB. Further, in the first transmission mode, the first communication device may send CBG feedback information to the second communication device, to feed back whether the at least one CBG in the second TB is correctly received.

It should be understood that the third communication device may be a primary node of the first communication device, that is, the first communication device is a secondary node of the third communication device, and the third communication device may perform configuration on the first communication device.

In some embodiments, the third communication device may be the second communication device.

In this embodiment, the first communication device may enter the first transmission mode based on a configuration of the third communication device, to transmit the first TB based on a CBG, and perform CBG-based feedback on the received second TB, to avoid transmitting the entire TB. This improves transmission efficiency and reduces resource consumption.

FIG. 7 is a schematic flowchart of interaction in a communication method 400 according to an embodiment of this application. As shown in FIG. 7, the method 400 includes the following steps.

S410: A fourth communication device sends configuration information to a second communication device, where the configuration information indicates the second communication device to configure a first transmission mode.

S420: A first communication device sends first information to the second communication device in the first transmission mode.

Correspondingly, the second communication device receives, in the first transmission mode, the first information sent by the first communication device.

It should be noted that the first transmission mode is the same as that in the embodiment shown in FIG. 6, and details are not described herein again. Similarly, in the first transmission mode, the second communication device may receive at least one first CBG of a first TB transmitted by the first communication device, instead of receiving the entire first TB. In addition, the second communication device may send at least one CBG of a second TB to the first communication device, instead of sending the entire second TB.

It should be understood that the fourth communication device may be a primary node of the second communication device, that is, the second communication device is a secondary node of the fourth communication device. The fourth communication device may perform configuration on the second communication device.

Optionally, the fourth communication device may be the first communication device; or the fourth communication device and the third communication device may be a same device. When the fourth communication device and the third communication device are a same communication device, the communication device serves as a primary node of the first communication device and the second communication device, and sends configuration information to the first communication device and the second communication device, to configure a transmission mode of the first communication device and the second communication device.

A technical effect of this embodiment is similar to that of the embodiment shown in FIG. 6, and details are not described herein again.

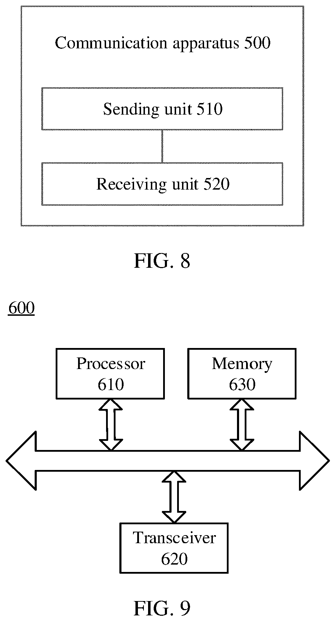

The methods provided in embodiments of this application are described above in detail with reference to FIG. 5 and FIG. 7. Apparatuses provided in embodiments of this application are described below in detail with reference to FIG. 8 and FIG. 9.

FIG. 8 is a schematic diagram of a structure of a communication apparatus 500 according to an embodiment of this application. As shown in FIG. 7, the communication apparatus 500 may include a sending unit 510 and a receiving unit 520.

Optionally, the communication apparatus 500 may be used in the first communication device in the foregoing method embodiment, for example, the communication apparatus 500 may be the first communication device or a component (for example, a chip or a chip system) configured in the first communication device.

When the communication apparatus 500 is used in the first communication device, the sending unit 510 is configured to send first information to a second communication device. The first information includes transmission indication information and at least one first code block group CBG of a first transport block TB, and the transmission indication information indicates a length of the first TB and/or a location of the at least one first CBG in the first TB.

In some embodiments, the transmission indication information includes information indicating that the at least one first CBG is all or a part of CBGs of the first TB.

In some embodiments, when the at least one first CBG is all the CBGs of the first TB, the transmission indication information includes information that indicates the length of the first TB and/or modulation and coding scheme information; or when the at least one first CBG is the part of CBGs of the first TB, the transmission indication information includes information about the location of the at least one first CBG in the first TB.

In some embodiments, the transmission indication information includes a first bitmap, bits in the first bitmap are in a one-to-one correspondence with CBGs included in the first TB, and the bits in the first bitmap indicate whether the corresponding CBGs in the first TB are included in the at least one first CBG.

In some embodiments, the transmission indication information includes a first field. When the first field is a first value, the at least one first CBG is the part of CBGs of the first TB; or when the first field is any value in a preset value set, the at least one first CBG is all the CBGs of the first TB. The preset value set does not include the first value.

In some embodiments, when the first field is the any value in the preset value set, the first field indicates corresponding modulation and coding scheme information.

In some embodiments, the transmission indication information further includes a second field. When the first field is the first value, the second field indicates the location of the at least one first CBG in the first TB; or when the first field is the any value in the preset value set, the second field indicates the length of the first TB.

In some embodiments, when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

In some embodiments, the first information further includes CBG feedback information, and the CBG feedback information indicates whether a CBG in a second TB sent by the second communication device last time is correctly received.

In some embodiments, the CBG feedback information includes a second bitmap, bits in the second bitmap are in a one-to-one correspondence with CBGs included in the second TB, and the bits in the second bitmap indicate whether the corresponding CBGs in the second TB are correctly received.

In some embodiments, the first information further includes a sequence number of the first TB, and the sequence number of the first TB indicates that the first TB is the same as or different from a third TB sent by the first communication device to the second communication device last time.

In some embodiments, the first information includes a control part, the control part includes control information, and the control information includes at least one of the following: the transmission indication information, the CBG feedback information, the sequence number of the first TB, and information about a reference signal density corresponding to the at least one first CBG.

In some embodiments, the control part further includes a first cyclic redundancy check CRC field, and the first CRC field is used to check the control information.

In some embodiments, the first information further includes a data part, and the data part includes the at least one first CBG.

In some embodiments, the control part further includes a first scrambling code, and the first scrambling code is used to scramble the first CRC.

In some embodiments, the control part is coded by using a polar code.

In some embodiments, the data part is coded by using a polar code.

In some embodiments, the receiving unit 520 in the communication apparatus 500 is configured to receive configuration information sent by a third communication device. The configuration information indicates the first communication device to configure a first transmission mode. The sending unit is specifically configured to send the first information to the second communication device in the first transmission mode.

In some embodiments, the sending unit is further configured to send configuration information to the second communication device. The configuration information indicates the second communication device to configure a first transmission mode, and the first transmission mode is used to transmit the first information.

It should be understood that a specific process in which the units perform the foregoing corresponding steps is described in detail in the foregoing method embodiments, and for brevity, details are not described herein.

Optionally, the communication apparatus 500 shown in FIG. 7 may be used in the second communication device in the foregoing method embodiment, for example, the communication apparatus 500 may be the second communication device or a component (for example, a chip or a chip system) configured in the second communication device.

When the communication apparatus 500 is used in the second communication device, the receiving unit 520 is configured to receive the first information sent by the first communication device. The first information includes the transmission indication information and the at least one first CBG of the first TB, and the transmission indication information indicates the length of the first TB and/or the location of the at least one first CBG in the first TB.

In some embodiments, the transmission indication information includes information indicating that the at least one first CBG is all or a part of CBGs of the first TB.

In some embodiments, when the at least one first CBG is all the CBGs of the first TB, the transmission indication information includes information that indicates a length of the at least one first CBG and/or modulation and coding scheme information; or when the at least one first CBG is the part of CBGs of the first TB, the transmission indication information includes information about the location of the at least one first CBG in the first TB.

In some embodiments, the transmission indication information includes a first bitmap, bits in the first bitmap are in a one-to-one correspondence with CBGs included in the first TB, and the bits in the first bitmap indicate whether the corresponding CBGs in the first TB are included in the at least one first CBG.

In some embodiments, the transmission indication information includes a first field. When the first field is a first value, the at least one first CBG is the part of CBGs of the first TB; or when the first field is any value in a preset value set, the at least one first CBG is all the CBGs of the first TB. The preset value set does not include the first value.

In some embodiments, when the first field is the any value in the preset value set, the first field indicates corresponding modulation and coding scheme information.

In some embodiments, the transmission indication information further includes a second field. When the first field is the first value, the second field indicates the location of the at least one first CBG in the first TB; or when the first field is the any value in the preset value set, the second field indicates the length of the first TB.

In some embodiments, when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

In some embodiments, the first information further includes CBG feedback information, and the CBG feedback information indicates whether a CBG in a second TB sent by the second communication device last time is correctly received.

In some embodiments, the CBG feedback information includes a second bitmap, bits in the second bitmap are in a one-to-one correspondence with CBGs included in the second TB, and the bits in the second bitmap indicate whether the corresponding CBGs in the second TB are correctly received.

In some embodiments, the first information further includes a sequence number of the first TB, and the sequence number of the first TB indicates that the first TB is the same as or different from a third TB sent by the first communication device to the second communication device last time.

In some embodiments, the first information includes a control part, the control part includes control information, and the control information includes at least one of the following: the transmission indication information, the CBG feedback information, the sequence number of the first TB, and information about a reference signal density corresponding to the at least one first CBG.

In some embodiments, the control part further includes a first CRC field, and the first CRC field is used to check the control information.

In some embodiments, the first information further includes a data part, the data part includes a protocol data unit PDU, and the PDU includes the at least one first CBG.

In some embodiments, the control part further includes a first scrambling code, and the first scrambling code is used to scramble the first CRC.

In some embodiments, the control part is coded by using a polar code.

In some embodiments, the data part is coded by using a polar code.

In some embodiments, the receiving unit is further configured to receive configuration information sent by a fourth communication device. The configuration information indicates the second communication device to configure a first transmission mode. The receiving unit is specifically configured to send the first information to the second communication device in the first transmission mode.

In some embodiments, the sending unit in the communication apparatus 500 is configured to send configuration information to the first communication device. The configuration information indicates the first communication device to configure a first transmission mode, and the first transmission mode is used to transmit the first information.

It should be understood that a specific process in which the units perform the foregoing corresponding steps is described in detail in the foregoing method embodiments, and for brevity, details are not described herein.

When the communication apparatus 500 is a communication device (for example, the first communication device or the second communication device), both the sending unit 510 and the receiving unit 520 in the communication apparatus 500 may be implemented by using a transceiver, for example, the transceiver may correspond to a transceiver 620 in a communication device 600 shown in FIG. 9.

When the communication apparatus 500 is a chip or a chip system configured in a communication device (for example, the first communication device or the second communication device), both the sending unit 510 and the receiving unit 520 in the communication apparatus 500 may be implemented through an input/output interface, a circuit, or the like.

FIG. 9 is another schematic block diagram of a communication apparatus 600 according to an embodiment of this application. As shown in FIG. 9, the apparatus 600 may include a processor 610, a transceiver 620, and a memory 630. The processor 610, the transceiver 620, and the memory 630 communicate with each other through an internal connection path. The memory 630 is configured to store instructions. The processor 610 is configured to execute the instructions stored in the memory 630, to control the transceiver 620 to send a signal and/or receive a signal.

It should be understood that the communication apparatus 600 may correspond to the first communication device or the second communication device in the foregoing method embodiments, and may be configured to perform steps and/or procedures performed by the first communication device or the second communication device in the foregoing method embodiments. Optionally, the memory 630 may include a read-only memory and a random access memory, and provide instructions and data for the processor. A part of the memory may further include a nonvolatile random access memory. The memory 630 may be a separate component, or may be integrated in the processor 610. The processor 610 may be configured to execute the instructions stored in the memory 630. When the processor 610 executes the instructions stored in the memory, the processor 610 is configured to perform the steps and/or procedures of the foregoing method embodiments corresponding to the first communication device or the second communication device.

Optionally, the communication apparatus 600 is the first communication device in the foregoing embodiment.

Optionally, the communication apparatus 600 is the second communication device in the foregoing embodiment.

The transceiver 620 may include a transmitter and a receiver. The transceiver 620 may further include an antenna. There may be one or more antennas. The processor 610, the memory 630, and the transceiver 620 may be devices integrated in different chips. For example, the processor 610 and the memory 630 may be integrated in a baseband chip, while the transceiver 620 may be integrated in a radio frequency chip. The processor 610, the memory 630, and the transceiver 620 may alternatively be devices integrated in a same chip. This is not limited in this application.

Optionally, the communication apparatus 600 is a component configured in the first communication device, for example, a chip or a chip system.

Optionally, the communication apparatus 600 is a component configured in the second communication device, for example, a chip or a chip system.

The transceiver 620 may alternatively be a communication interface, for example, an input/output interface or a circuit. The transceiver 620, the processor 610, and the memory 620 may all be integrated in a same chip, for example, integrated in a baseband chip.

This application further provides a processing apparatus, including at least one processor. The at least one processor is configured to execute a computer program stored in a memory, so that the processing apparatus performs the method performed by a test device, the method performed by the first communication device, or the method performed by the second communication device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the first communication device or the method performed by the second communication device in the foregoing method embodiments.

An embodiment of this application further provides a processing apparatus, including a processor and a memory. The memory is configured to store a computer program, and the processor is configured to invoke the computer program from the memory and run the computer program, so that the processing apparatus performs the method performed by the first communication device or the method performed by the second communication device in the foregoing method embodiments.

It should be understood that, the processing apparatus may be one or more chips. For example, the processing apparatus may be a field programmable gate array (field programmable gate array, FPGA), an application-specific integrated chip (application-specific integrated circuit, ASIC), a system-on-a-chip (system-on-a-chip, SoC), a central processing unit (central processing unit, CPU), a network processor (network processor, NP), a digital signal processing (digital signal processing, DSP) circuit, a microcontroller (micro controller unit, MCU), a programmable controller (programmable logic device, PLD), or another integrated chip.

In an implementation process, the steps in the foregoing methods can be completed by using an integrated logical circuit of hardware in the processor, or by using instructions in a form of software. The steps of the method disclosed with reference to embodiments of this application may be directly executed and completed by a hardware processor, or may be executed and completed by using a combination of hardware in the processor and a software module. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example but not a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories of the systems and methods described in the text are intended to include, but are not limited to these and any other suitable types of memories.

According to the method provided in embodiments of this application, this application further provides a computer program product. The computer program product includes computer program code. When the computer program code runs on a computer, the computer is enabled to perform the method performed by the first communication device in the foregoing method embodiments, or the computer is enabled to perform the method performed by the second communication device in the foregoing method embodiments.

According to the method provided in embodiments of this application, this application further provides a computer-readable storage medium. The computer-readable storage medium stores program code. When the program code runs on a computer, the computer is enabled to perform the method performed by the first communication device in the foregoing method embodiments, or the computer is enabled to perform the method performed by the second communication device in the foregoing method embodiments.

According to the method provided in embodiments of this application, this application further provides a communication system. The communication system may include the foregoing first communication device and second communication device.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first communication device, first information to a second communication device, wherein
the first information comprises transmission indication information and at least one first code block group CBG of a first transport block TB, and the transmission indication information indicates a length of the first TB and/or a location of the at least one first CBG in the first TB.

2. The method according to claim 1, wherein the transmission indication information comprises information indicating that the at least one first CBG is all or a part of CBGs of the first TB.

3. The method according to claim 1 or 2, wherein
when the at least one first CBG is all the CBGs of the first TB, the transmission indication information comprises information that indicates the length of the first TB and/or modulation and coding scheme information; or
when the at least one first CBG is the part of CBGs of the first TB, the transmission indication information comprises information about the location of the at least one first CBG in the first TB.

4. The method according to any one of claims 1 to 3, wherein the transmission indication information comprises a first bitmap, bits in the first bitmap are in a one-to-one correspondence with CBGs comprised in the first TB, and the bits in the first bitmap indicate whether the corresponding CBGs in the first TB are comprised in the at least one first CBG.

5. The method according to any one of claims 1 to 4, wherein the transmission indication information comprises a first field; and when the first field is a first value, the at least one first CBG is the part of CBGs of the first TB; or when the first field is any value in a preset value set, the at least one first CBG is all the CBGs of the first TB, wherein the preset value set does not comprise the first value.

6. The method according to claim 5, wherein when the first field is the any value in the preset value set, the first field indicates corresponding modulation and coding scheme information.

7. The method according to claim 5 or 6, wherein the transmission indication information further comprises a second field; and
when the first field is the first value, the second field indicates the location of the at least one first CBG in the first TB; or
when the first field is the any value in the preset value set, the second field indicates the length of the first TB.

8. The method according to any one of claims 1 to 7, wherein when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

9. The method according to any one of claims 1 to 8, wherein the first information further comprises CBG feedback information, and the CBG feedback information indicates whether a CBG in a second TB sent by the second communication device last time is correctly received.

10. The method according to claim 9, wherein the CBG feedback information comprises a second bitmap, bits in the second bitmap are in a one-to-one correspondence with CBGs comprised in the second TB, and the bits in the second bitmap indicate whether the corresponding CBGs in the second TB are correctly received.

11. The method according to any one of claims 1 to 10, wherein the first information further comprises a sequence number of the first TB, and the sequence number of the first TB indicates that the first TB is the same as or different from a third TB sent by the first communication device to the second communication device last time.

12. The method according to any one of claims 1 to 11, wherein the first information comprises a control part, the control part comprises control information, and the control information comprises at least one of the following: the transmission indication information, the CBG feedback information, the sequence number of the first TB, and information about a reference signal density corresponding to the at least one first CBG.

13. The method according to claim 12, wherein the control part further comprises a first cyclic redundancy check CRC field, and the first CRC field is used to check the control information.

14. The method according to claim 12 or 13, wherein the first information further comprises a data part, and the data part comprises the at least one first CBG.

15. The method according to claim 13, wherein the control part further comprises a first scrambling code, and the first scrambling code is used to scramble the first CRC.

16. The method according to any one of claims 12 to 15, wherein the control part is coded by using a polar code.

17. The method according to claim 14, wherein the data part is coded by using a polar code.

18. The method according to any one of claims 1 to 17, wherein the method further comprises:
receiving, by the first communication device, configuration information sent by a third communication device, wherein the configuration information indicates the first communication device to configure a first transmission mode; and
the sending, by a first communication device, first information to a second communication device comprises:
sending, by the first communication device, the first information to the second communication device in the first transmission mode.

19. The method according to any one of claims 1 to 17, wherein the method further comprises:
sending, by the first communication device, configuration information to the second communication device, wherein the configuration information indicates the second communication device to configure a first transmission mode, and the first transmission mode is used to transmit the first information.

20. A communication method, comprising:
receiving, by a second communication device, first information sent by a first communication device, wherein
the first information comprises transmission indication information and at least one first CBG of a first TB, and the transmission indication information indicates a length of the first TB and/or a location of the at least one first CBG in the first TB.

21. The method according to claim 20, wherein the transmission indication information comprises information indicating that the at least one first CBG is all or a part of CBGs of the first TB.

22. The method according to claim 20 or 21, wherein
when the at least one first CBG is all the CBGs of the first TB, the transmission indication information comprises information that indicates a length of the at least one first CBG and/or modulation and coding scheme information; or
when the at least one first CBG is the part of CBGs of the first TB, the transmission indication information comprises information about the location of the at least one first CBG in the first TB.

23. The method according to claims 20 to 22, wherein the transmission indication information comprises a first bitmap, bits in the first bitmap are in a one-to-one correspondence with CBGs comprised in the first TB, and the bits in the first bitmap indicate whether the corresponding CBGs in the first TB are comprised in the at least one first CBG.

24. The method according to any one of claims 20 to 23, wherein the transmission indication information comprises a first field; and when the first field is a first value, the at least one first CBG is the part of CBGs of the first TB; or when the first field is any value in a preset value set, the at least one first CBG is all the CBGs of the first TB, wherein the preset value set does not comprise the first value.

25. The method according to claim 24, wherein when the first field is the any value in the preset value set, the first field indicates corresponding modulation and coding scheme information.

26. The method according to claim 24 or 25, wherein the transmission indication information further comprises a second field; and
when the first field is the first value, the second field indicates the location of the at least one first CBG in the first TB; or
when the first field is the any value in the preset value set, the second field indicates the length of the first TB.

27. The method according to any one of claims 20 to 26, wherein when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

28. The method according to any one of claims 20 to 27, wherein the first information further comprises CBG feedback information, and the CBG feedback information indicates whether a CBG in a second TB sent by the second communication device last time is correctly received.

29. The method according to claim 28, wherein the CBG feedback information comprises a second bitmap, bits in the second bitmap are in a one-to-one correspondence with CBGs comprised in the second TB, and the bits in the second bitmap indicate whether the corresponding CBGs in the second TB are correctly received.

30. The method according to any one of claims 20 to 29, wherein the first information further comprises a sequence number of the first TB, and the sequence number of the first TB indicates that the first TB is the same as or different from a third TB sent by the first communication device to the second communication device last time.

31. The method according to any one of claims 20 to 30, wherein the first information comprises a control part, the control part comprises control information, and the control information comprises at least one of the following: the transmission indication information, the CBG feedback information, the sequence number of the first TB, and information that indicates a reference signal density corresponding to the at least one first CBG.

32. The method according to claim 31, wherein the control part further comprises a first CRC field, and the first CRC field is used to check the control information.

33. The method according to claim 31 or 32, wherein the first information further comprises a data part, the data part comprises a protocol data unit PDU, and the PDU comprises the at least one first CBG.

34. The method according to claim 32, wherein the control part further comprises a first scrambling code, and the first scrambling code is used to scramble the first CRC.

35. The method according to any one of claims 31 to 34, wherein the control part is coded by using a polar code.

36. The method according to claim 33, wherein the data part is coded by using a polar code.

37. The method according to any one of claims 20 to 36, wherein the method further comprises:
receiving, by the second communication device, configuration information sent by a fourth communication device, wherein the configuration information indicates the second communication device to configure a first transmission mode; and
the receiving, by a second communication device, first information sent by a first communication device comprises:
receiving, by the second communication device in the first transmission mode, the first information sent by the first communication device.

38. The method according to any one of claims 20 to 36, wherein the method further comprises:
sending, by the second communication device, configuration information to the first communication device, wherein the configuration information indicates the first communication device to configure a first transmission mode, and the first transmission mode is used to transmit the first information.

39. A communication apparatus, comprising:
a sending unit, configured to send first information to a second communication device, wherein
the first information comprises transmission indication information and at least one first code block group CBG of a first transport block TB, and the transmission indication information indicates a length of the first TB and/or a location of the at least one first CBG in the first TB.

40. The apparatus according to claim 39, wherein the transmission indication information comprises information indicating that the at least one first CBG is all or a part of CBGs of the first TB.

41. The apparatus according to claim 39 or 40, wherein
when the at least one first CBG is all the CBGs of the first TB, the transmission indication information comprises information that indicates the length of the first TB and/or modulation and coding scheme information; or
when the at least one first CBG is the part of CBGs of the first TB, the transmission indication information comprises information about the location of the at least one first CBG in the first TB.

42. The apparatus according to any one of claims 39 to 41, wherein the transmission indication information comprises a first bitmap, bits in the first bitmap are in a one-to-one correspondence with CBGs comprised in the first TB, and the bits in the first bitmap indicate whether the corresponding CBGs in the first TB are comprised in the at least one first CBG.

43. The apparatus according to any one of claims 39 to 42, wherein the transmission indication information comprises a first field; and when the first field is a first value, the at least one first CBG is the part of CBGs of the first TB; or when the first field is any value in a preset value set, the at least one first CBG is all the CBGs of the first TB, wherein the preset value set does not comprise the first value.

44. The apparatus according to claim 43, wherein when the first field is the any value in the preset value set, the first field indicates corresponding modulation and coding scheme information.

45. The apparatus according to claim 43 or 44, wherein the transmission indication information further comprises a second field; and
when the first field is the first value, the second field indicates the location of the at least one first CBG in the first TB; or
when the first field is the any value in the preset value set, the second field indicates the length of the first TB.

46. The apparatus according to any one of claims 39 to 45, wherein when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

47. The apparatus according to any one of claims 39 to 46, wherein the first information further comprises CBG feedback information, and the CBG feedback information indicates whether a CBG in a second TB sent by the second communication device last time is correctly received.

48. The apparatus according to claim 47, wherein the CBG feedback information comprises a second bitmap, bits in the second bitmap are in a one-to-one correspondence with CBGs comprised in the second TB, and the bits in the second bitmap indicate whether the corresponding CBGs in the second TB are correctly received.

49. The apparatus according to any one of claims 39 to 48, wherein the first information further comprises a sequence number of the first TB, and the sequence number of the first TB indicates that the first TB is the same as or different from a third TB sent by the first communication device to the second communication device last time.

50. The apparatus according to any one of claims 39 to 49, wherein the first information comprises a control part, the control part comprises control information, and the control information comprises at least one of the following: the transmission indication information, the CBG feedback information, the sequence number of the first TB, and information about a reference signal density corresponding to the at least one first CBG.

51. The apparatus according to claim 50, wherein the control part further comprises a first cyclic redundancy check CRC field, and the first CRC field is used to check the control information.

52. The apparatus according to claim 50 or 51, wherein the first information further comprises a data part, and the data part comprises the at least one first CBG.

53. The apparatus according to claim 51, wherein the control part further comprises a first scrambling code, and the first scrambling code is used to scramble the first CRC.

54. The apparatus according to any one of claims 50 to 53, wherein the control part is coded by using a polar code.

55. The apparatus according to claim 52, wherein the data part is coded by using a polar code.

56. The apparatus according to any one of claims 39 to 55, further comprising:
a receiving unit, configured to receive configuration information sent by a third communication device, wherein the configuration information indicates the first communication device to configure a first transmission mode, wherein
the sending unit is specifically configured to send the first information to the second communication device in the first transmission mode.

57. The apparatus according to any one of claims 39 to 55, wherein the sending unit is further configured to:
send configuration information to the second communication device, wherein the configuration information indicates the second communication device to configure a first transmission mode, and the first transmission mode is used to transmit the first information.

58. A communication apparatus, comprising
a receiving unit, configured to receive first information sent by a first communication device, wherein
the first information comprises transmission indication information and at least one first CBG of a first TB, and the transmission indication information indicates a length of the first TB and/or a location of the at least one first CBG in the first TB.

59. The apparatus according to claim 58, wherein the transmission indication information comprises information indicating that the at least one first CBG is all or a part of CBGs of the first TB.

60. The apparatus according to claim 58 or 59, wherein
when the at least one first CBG is all the CBGs of the first TB, the transmission indication information comprises information that indicates a length of the at least one first CBG and/or modulation and coding scheme information; or
when the at least one first CBG is the part of CBGs of the first TB, the transmission indication information comprises information about the location of the at least one first CBG in the first TB.

61. The apparatus according to claims 58 to 60, wherein the transmission indication information comprises a first bitmap, bits in the first bitmap are in a one-to-one correspondence with CBGs comprised in the first TB, and the bits in the first bitmap indicate whether the corresponding CBGs in the first TB are comprised in the at least one first CBG.

62. The apparatus according to any one of claims 58 to 61, wherein the transmission indication information comprises a first field; and when the first field is a first value, the at least one first CBG is the part of CBGs of the first TB; or when the first field is any value in a preset value set, the at least one first CBG is all the CBGs of the first TB, wherein the preset value set does not comprise the first value.

63. The apparatus according to claim 62, wherein when the first field is the any value in the preset value set, the first field indicates corresponding modulation and coding scheme information.

64. The apparatus according to claim 62 or 63, wherein the transmission indication information further comprises a second field; and
when the first field is the first value, the second field indicates the location of the at least one first CBG in the first TB; or
when the first field is the any value in the preset value set, the second field indicates the length of the first TB.

65. The apparatus according to any one of claims 58 to 64, wherein when the at least one first CBG is the part of CBGs of the first TB, the at least one first CBG is a retransmitted CBG, and a length of a TB and/or a modulation and coding scheme corresponding to the at least one first CBG are/is the same as a length of the first TB and/or a modulation and coding scheme that are/is indicated when the first TB is initially transmitted.

66. The apparatus according to any one of claims 58 to 65, wherein the first information further comprises CBG feedback information, and the CBG feedback information indicates whether a CBG in a second TB sent by the second communication device last time is correctly received.

67. The apparatus according to claim 56, wherein the CBG feedback information comprises a second bitmap, bits in the second bitmap are in a one-to-one correspondence with CBGs comprised in the second TB, and the bits in the second bitmap indicate whether the corresponding CBGs in the second TB are correctly received.

68. The apparatus according to any one of claims 58 to 67, wherein the first information further comprises a sequence number of the first TB, and the sequence number of the first TB indicates that the first TB is the same as or different from a third TB sent by the first communication device to the second communication device last time.

69. The apparatus according to any one of claims 58 to 68, wherein the first information comprises a control part, the control part comprises control information, and the control information comprises at least one of the following: the transmission indication information, the CBG feedback information, the sequence number of the first TB, and information that indicates a reference signal density corresponding to the at least one first CBG.

70. The apparatus according to claim 96, wherein the control part further comprises a first CRC field, and the first CRC field is used to check the control information.

71. The apparatus according to claim 69 or 70, wherein the first information further comprises a data part, the data part comprises a protocol data unit PDU, and the PDU comprises the at least one first CBG.

72. The apparatus according to claim 70, wherein the control part further comprises a first scrambling code, and the first scrambling code is used to scramble the first CRC.

73. The apparatus according to any one of claims 69 to 72, wherein the control part is coded by using a polar code.

74. The apparatus according to claim 71, wherein the data part is coded by using a polar code.

75. The apparatus according to any one of claims 58 to 74, wherein
the receiving unit is further configured to receive configuration information sent by a fourth communication device, wherein the configuration information indicates the second communication device to configure a first transmission mode; and
the receiving unit is specifically configured to: receive, in the first transmission mode, the first information sent by the first communication device.

76. The apparatus according to any one of claims 58 to 74, further comprising:
a sending unit, configured to send configuration information to the first communication device, wherein the configuration information indicates the first communication device to configure a first transmission mode, and the first transmission mode is used to transmit the first information.

77. A communication device, comprising a processor and a memory, wherein the memory is configured to store a computer program, and the processor is configured to invoke and run the computer program stored in the memory, to perform the method according to any one of claims 1 to 19.

78. A communication device, comprising a processor and a memory, wherein the memory is configured to store a computer program, and the processor is configured to invoke and run the computer program stored in the memory, to perform the method according to any one of claims 20 to 38.

79. A chip, comprising a processor, configured to invoke computer instructions from a memory and run the computer instructions, so that a device installed with the chip performs the method according to any one of claims 1 to 19.

80. A chip, comprising a processor, configured to invoke computer instructions from a memory and run the computer instructions, so that a device installed with the chip performs the method according to any one of claims 20 to 38.

81. A computer-readable storage medium, configured to store computer program instructions, wherein the computer program enables a computer to perform the method according to any one of claims 1 to 19.

82. A computer-readable storage medium, configured to store computer program instructions, wherein the computer program enables a computer to perform the method according to any one of claims 20 to 38.

83. A computer program product, comprising computer program instructions, wherein the computer program instructions enable a computer to perform the method according to any one of claims 1 to 19.

84. A computer program product, comprising computer program instructions, wherein the computer program instructions enable a computer to perform the method according to any one of claims 20 to 38.
